Europäisches Patentamt

**European Patent Office**

**Office européen des brevets**

(19)

(11) Veröffentlichungsnummer: **0 207 213**

**B1**

(12)

# EUROPÄISCHE PATENTSCHRIFT

(45) Veröffentlichungstag der Patentschrift:
08.03.89

(21) Anmeldenummer: **86101879.4**

(22) Anmeldetag: **14.02.86**

(51) Int. Cl.⁴: **G 01 S 3/32**

(54) Verfahren zum Erzeugen von Antennennachführsignalen.

(30) Priorität: **31.05.85 DE 3519529**

(43) Veröffentlichungstag der Anmeldung:
**07.01.87 Patentblatt 87/2**

(45) Bekanntmachung des Hinweises auf die Patenterteilung:
**08.03.89 Patentblatt 89/10**

(84) Benannte Vertragsstaaten:
**DE FR GB IT**

(56) Entgegenhaltungen:
**EP-A-0 093 234**
**WO-A-84/03360**
**US-A-2 547 890**
**US-A-3 761 927**

**NACHRICHTENTECHNISCHE ZEITSCHRIFT N.T.Z.,**
**Band 38, Nr. 7, Juli 1985, Seiten 478-480,482,483,**
**Berlin, DE; W. STEINERT: "1-Kanal-**
**Monopulssystem für eine einfache**
**Antennennachführung"**

(73) Patentinhaber: **ANT Nachrichtentechnik GmbH,**
**Gerberstrasse 33, D-7150 Backnang (DE)**

(72) Erfinder: **Steinert, Wolfgang, Dipl.- Ing.,**
**Schillerstrasse 42, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Erzeugen von Steuersignalen zum Nachführen einer Antenne auf eine andere ein Bakensignal aussendende Antenne, bei dem in einem Modenkoppler aus dem von der nachführbaren Antenne empfangenen Bakensignal ein Summensignal und mindestens ein Differenzsignal abgeleitet, das Differenzsignal einer zyklischen Phasenänderung unterworfen, dieses verschiedene Phasenzustände durchlaufende Differenzsignal dem Summensignal überlagert und schließlich ermittelt wird, ob das durch die Überlagerung des Differenz- und des Summensignals entstandene amplitudenmodulierte Signal beim Übergang des Differenzsignals von einem Phasenzustand zu einem anderen eine positive oder negative Amplitudenänderung erfährt und um welchen Betrag sich das amplitudenmodulierte Signal ändert.

Ein derartiges Verfahren zum Erzeugen von Antennennachführsignalen ist aus der EP-A-0 093 234 A1 bekannt.

In Satellitenübertragungssystemen ist es erstrebenswert, gerade für die Antennen des Satelliten oder auch für die Antennen von benutzernah installierten kleinen Erdstationen möglichst einfache und wenig Platz in Anspruch nehmende Nachführeinrichtungen vorzusehen.

Der Erfindung liegt daher die Aufgabe zugrunde, ein Verfahren zum Erzeugen von Antennennachführsignalen der eingangs genannten Art anzugeben, das mit sehr einfachen und platzsparenden Mitteln realisierbar ist.

Erfindungsgemäß wird diese Aufgabe durch die im Anspruch angegebenen Merkmale gelöst.

Zweckmäßige Ausführungen der Erfindung gehen aus den Unteransprüchen hervor.

Anhand von in der Zeichnung dargestellten Ausführungsbeispielen wird nachfolgend die Erfindung näher erläutert. Es zeigen:

Fig. 1 Summen- und Differenz-Antennendiagramme,
Fig. 2 die vektorielle Bestimmung eines amplitudenmodulierten Signals bei einem linear polarisierten Bakensignal und
Fig. 3 bei einem zirkular polarisierten Bakensignal,
Fig. 4a ein aus dem Summen- und dem Differenzsignal abgeleitetes und amplitudenmoduliertes Signal,
Fig. 4b, 4c aus dem Signal der Fig. 4a abgeleitete Nachführsignale,
Fig. 5 ein Prinzipschaltbild eines Monopulsschaltnetzwerks für ein linear polarisiertes Bakensignal,
Fig. 6 ein Prinzipschaltbild eines Monopulsschaltnetzwerks für ein zirkular polarisiertes Bakensignal,
Fig. 7 ein Prinzipschaltbild zur Ermittlung der Nachführsignale und
Fig. 8 und 9 zwei Prinzipschaltbilder von mehreren im Zeitmultiplex betriebenen Monopulsschaltnetzwerken.

Zur Ermittlung von Nachführsignalen, welche die Ablage einer Antenne von einer anderen Zielantenne angeben, wird hier das z. B. aus der EP-0 093 234 A1 bekannte Monopulsverfahren angewendet. Dazu sendet die Zielantenne an die nachführbare Antenne ein Bakensignal, welches entweder linear oder zirkular polarisiert ist, aus.

Die nachzuführende Antenne weist zwei verschiedene Strahlungsdiagramme auf, nämlich ein sogenanntes Summendiagramm- und ein Differenzdiagramm. Das Summendiagramm, es ist das Strahlungsdiagramm z. B. der $H_{10}$-Welle, besitzt ein Feldstärkemaximum in der elektrischen Achse der Antenne und verläuft zu beiden Seiten der Achse symmetrisch. Dagegen besitzt das Differenzdiagramm, es ist das Strahlungsdiagramm z. B. der $H_{20}$- $H_{11}$- $E_{11}$- oder $H_{01}$-Welle in der elektrischen Achse eine Nullstelle und verläuft zu beiden Seiten gegenphasig symmetrisch.

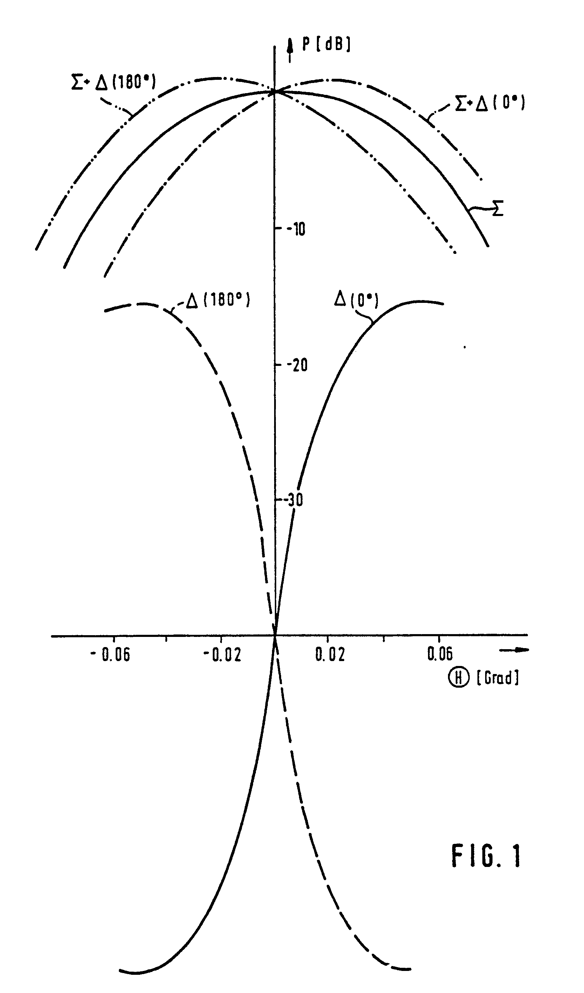

Ein sogenannter Modenkoppler, wie er z. B. aus der DE-PS-2 135 611 bekannt ist, koppelt die Wellentypen mit den unterschiedlichen Strahlungsdiagrammen getrennt voneinander aus und stellt an seinen Ausgängen ein Summensignal $\Sigma$ und ein Differenzsignal $\Delta$ zur Verfügung, deren Leistungen P in Abhängigkeit vom Ablagewinkel FIG zwischen der Antennenachse und dem einfallenden Bakensignal die in der Fig. 1 dargestellten Verläufe (durchgezogene Linien $\Sigma$, $\Delta$) haben.

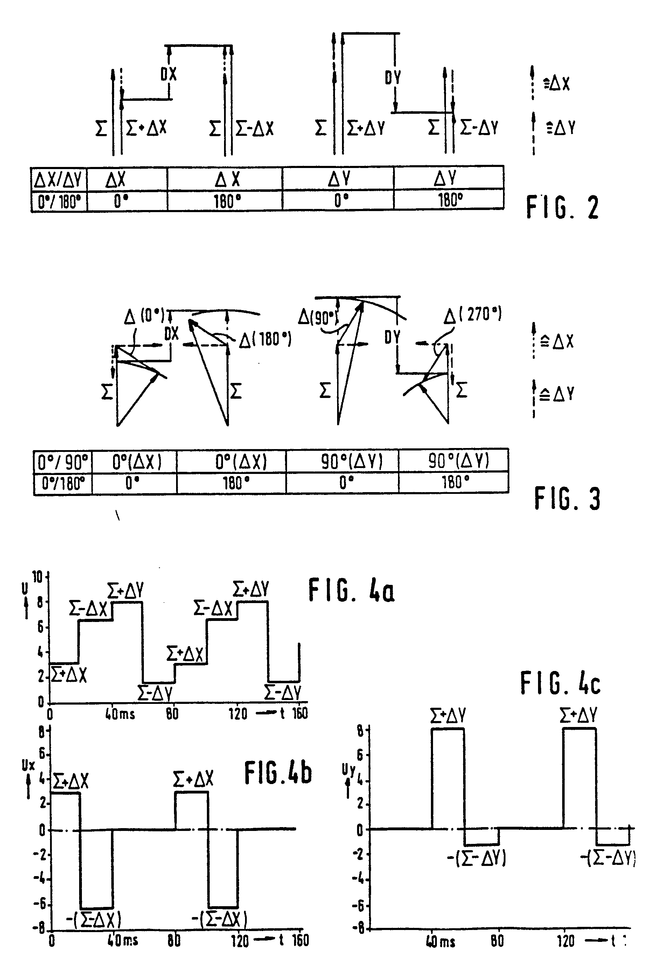

Zunächst sei an Hand des in Fig. 2 gezeigten Vektordiagramms die Ableitung von Nachführsignalen erörtert, wenn die nachführbare Antenne ein linear polarisiertes Bakensignal empfängt.

In diesem Fall liefert der Modenkoppler zwei voneinander unabhängige Differenzsignale $\Delta X$ und $\Delta Y$, aus welchen die Ablage der Antenne in Azimutrichtung (X) und in Elevationsrichtung (Y) herleitbar ist.

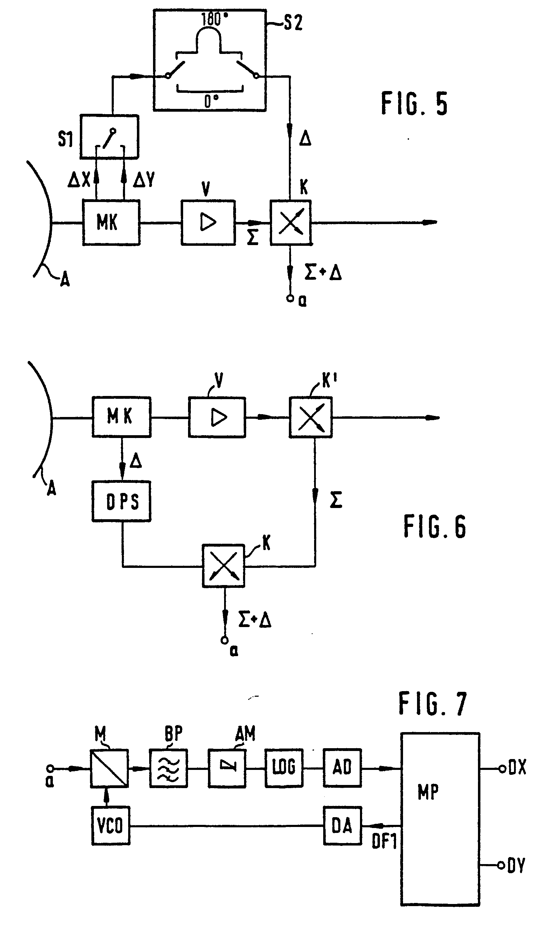

In einem Multiplexverfahren werden gemäß der Darstellung in Fig. 2 die verschiedenen Differenzsignale $\Delta X$ und $\Delta Y$ dem Summensignal $\Sigma$ überlagert. Eine Anordnung, welche dieses Multiplexverfahren durchführt, geht aus der Fig. 5 hervor. Darin wird zunächst von einem Schalter S1 z. B. das vom Modenkoppler MK bereitgestellte Differenzsignal $\Delta X$ zu einem zweiten Schalter S2 durchgeschaltet, welcher das Differenzsignal $\Delta X$ in einem ersten Schritt direkt nicht phasenverschoben und in einem zweiten Schritt über eine Umwegleitung mit einer Phasenverschiebung von 180° einem Koppler K zuführt. Der Koppler K überlagert dieses die zwei Phasenzustände 0° und 180° durchlaufende Differenzsignal $\Delta X$ dem über einen rauscharmen Verstärker V kommenden Summensignal $\Sigma$. An einem Ausgang a des Kopplers liegen demzufolge nacheinander das Signal $\Sigma + \Delta X$ und das Signal $\Sigma - \Delta X$ vor (vgl. Vektordiagramm in Fig. 2). Anschliessend schaltet der Schalter S1 auf den das Differenzsignal $\Delta Y$ liefernden Ausgang des Modenkopplers MK um, welches wiederum vom Schalter S2 in einem ersten Schritt nicht phasenverschoben und in einem zweiten Schritt um 180° phasenverschoben dem Koppler K zugeführt und dort dem Summensignal $\Sigma$ überlagert wird, so daß nacheinander am Ausgang a des Kopplers die Signale $\Sigma + \Delta Y$ und $\Sigma - \Delta Y$ erscheinen.

In der Fig. 1 ist stellvertretend für eines der beiden Differenzdiagramme $\Delta X$ bzw. $\Delta Y$ das Differenzdiagramm

Δ in der 0°- und der 180°-Phasenlage eingezeichnet. Außerdem sind dort die Diagramme Σ + Δ (0°) und Σ + Δ (180°) dargestellt, welche aus der Überlagerung des Summendiagramms mit dem nicht phasenverschobenen Differenzdiagramm Δ (0°) und dem um 180° phasenverschobenen Differenzdiagramm Δ (180°) hervorgehen. Es ist hier erkennbar, daß das Diagramm Σ + Δ (0°) für positive Ablagewinkel FIG größere Pegel hat als für entsprechende negative Ablagewinkel und umgekehrt das Diagramm Σ + Δ (180°) für positive Ablagewinkel FIG kleinere Pegel hat als für entsprechende negative Ablagewinkel. Daraus folgt, wie auch das Vektordiagramm in Fig. 2 verdeutlicht, daß z. B. bei einem negativen Ablagewinkel FIG der Übergang vom Signal Σ + Δ(0°) auf das Signal Σ + Δ (180°) = Σ - Δ (0°) einen positiven Pegelsprung und bei einem negativen Ablagewinkel FIG einen negativen Pegelsprung mit sich bringt. Das Vorzeichen dieses Pegelsprungs gibt also die Richtung und die Größe des Pegelsprungs den Betrag der Antennenablage an. Bei einem Ablagewinkel von 0° tritt kein Pegelsprung auf, da beide Diagramme Σ + Δ (0°) und Σ + Δ (180°) sich an dieser Stelle, wo das Summendiagramm sein Maximum hat, schneiden.

Wie oben erläutert, erscheint am Ausgang a des Kopplers K durch die im Multiplexverfahren durchgeführte Überlagerung des Summensignals Σ mit den die Phasenzustände 0° und 180° durchlaufenden Differenzsignalen ΔX und ΔY ein amplitudenmoduliertes Signal. Ein Beispiel des Amplitudenverlaufs U eines solchen amplitudenmodulierten Signals zeigt die Fig. 4a. Zerlegt man dieses amplitudenmodulierte Signal in getrennte den beiden Ablagerichtungen X und Y zugeordnete Signale, so entstehen die in Fig. 4b und Fig. 4c dargestellten Amplitudenverläufe Ux und Uy, aus denen die Nachführsignale für die Azimut- und die Elevationsrichtung ermittelt werden können. Nach den obigen Ausführungen gehen die Richtung und der Betrag der Antennenablage aus den Vorzeichen und Beträgen der Differenzen Dx = (Σ + ΔX) - (Σ - ΔX) und DY = (Σ + ΔY) - (Σ - ΔY) hervor, welche aus den Amplitudenverläufen Ux und Uy in den Fig. 4b und 4c bestimmbar sind.

Beim Empfang eines zirkular polarisierten Bakensignals gibt der Modenkoppler ein Differenzsignal Δ ab, das durch vektorielle Addition zweier orthogonaler Differenzsignalkomponenten ΔX und ΔY entsteht. In gleicher Weise wie beim Empfang eines linear polarisierten Bakensignals wird hier ein amplitudenmoduliertes Signal durch Überlagerung des Summensignals und des Differenzsignals Δ gebildet, woraus Nachführsignale Dx und Dy abgeleitet werden können. Dazu wird, wie das Vektordiagramm in Fig. 3 zeigt, das Differenzsignal Δ zyklisch um 0°, 180°, 90° und 270° phasenverschoben, so daß die Differenzsignalkomponenten ΔX und ΔY nacheinander in einem Phasenzustand des Differenzsignals Δ mit dem Summensignal in Phase und in einem anderen Phasenzustand des Differenzsignals Δ gegenphasig zum Summensignal Σ sind.

Aus der Fig. 6 geht ein Prinzipschaltbild eines Monopulsempfängers für ein zirkular polarisiertes Bakensignal hervor. Ein Modenkoppler MK koppelt aus dem von der Antenne A empfangenen zirkular polarisierten Bakensignal das Differenzsignal Δ aus, welches dann mit Hilfe eines digitalen Phasenschiebers DPS zyklisch in die vier Phasenzustände 0°, 180°, 90° und 270° versetzt wird. Das aus dem Nutzsignalpfad von einem Koppler K' angekoppelte Summensignal Σ wird durch einen weiteren Koppler K dem Differenzsignal Δ überlagert, so daß an seinem Ausgang a ein amplitudenmoduliertes Signal Σ + Δ vorliegt, dessen Amplitudenverlauf nacheinander die Werte Σ + Δ (0°), Σ + Δ (180°), Σ + Δ (90°) und Σ + Δ (270°) annimmt.

Anschließend wird nun die Amplitude des am Punkt a des Monopulsschaltnetzwerks anliegenden amplitudenmodulierten Signals detektiert und daraus die Nachführsignale Dx und Dy für die Antenne A bestimmt. Ein einfaches Verfahren, welches diese Aufgabe mit äußerst geringem Schaltungsaufwand löst, sei nachfolgend an Hand des in Fig. 7 dargestellten Prinzipschaltbilds erläutert.

Die Amplitudendetektion wird hier mit einem Amplitudendetektor AM vorgenommen, der z. B. lediglich aus einer Diode bestehen kann. Das Trägersignal des am Punkt a der Schaltung anliegenden amplitudenmodulierten Signals wird vorher in einem Mischer M in eine für den Amplitudendetektor geeignete niedere Frequenz umgesetzt. Zwischen dem Mischer M und dem Amplitudendetektor AM ist ein Bandpaßfilter BP eingefügt, welches für ein gefordertes möglichst hohes Signal-Rauschleistungsverhältnis des dem Amplitudendetektor A zugeführten Signals sorgt. Um die Forderung nach einem hohen Signal-Rauschleistungsverhältnis zu erfüllen, muß das Bandpaßfilter BP sehr schmalbandig sein. Die Frequenz des am Ausgang des Mischers M vorliegenden Signals ist aber nicht so stabil, daß sie ständig mit dem Durchlaßbereich des schmalbandigen Bandpaßfilters BP übereinstimmt. Es ist daher eine Frequenzregelung vorzunehmen. Dazu wird der Mischer M von dem Ausgangsignal eines spannungsgesteuerten Oszillators VCO angesteuert.

Die Frequenzregelung erfolgt dadurch, daß die Ausgangsfrequenz des spannungsgesteuerten Oszillators VCO während jeder Amplitudenstufe des amplitudenmodulierten Signals, also während der Dauer eines jeden Phasenzustandes des Differenzsignals, zwischen zwei Frequenzen fo + Δf und fo - Δf zyklisch umgeschaltet wird. Das amplitudenmodulierte Signal erfährt im Bandpaßfilter BP bei jeder der beiden Frequenzen f1 und f2, auf die das Signal im Mischer M auf Grund der Frequenzumschaltung des spannungsgesteuerten Oszillators (VCO) umgesetzt wird, eine Dämpfung A(f1), A(f2). Aus der Differenz der bei den beiden verschiedenen Frequenzen f1 und f2 hervorgerufenen Dämpfungen A(f1) und A(f2) wird, wie im folgenden noch näher beschrieben, ein Steuersignal DF1 für den spannungsgesteuerten Oszillator VCO abgeleitet. Die Differenz der Dämpfungen A(f1) und A(f2) wird zu Null, wenn die Mittenfrequenz zwischen den beiden Frequenzen f1 und f2 mit der Mittenfrequenz des Bandpaßfilters BP übereinstimmt. In diesem Fall sind nämlich die Dämpfungen A(f1) und A(f2) aufgrund der zur Mittenfrequenz symmetrisch verlaufenden Dämpfungskennlinie gleich groß.

Damit die Regelsteilheit der Frequenzregelung unabhängig vom Pegel des Eingangssignals konstant ist, wird das demodulierte Signal hinter dem Amplitudendetektor AM in einem Logarithmierverstärker LOG logarithmiert. Am Ausgang des Logarithmierverstärkers LOG treten dann nacheinander folgende Amplitudenstufen U1... U8 auf, wenn man davon ausgeht, daß ein zirkular polarisiertes Bakensignal empfangen worden ist:

$$U1 = \log [A(f1) \cdot \gamma(\Sigma + \Delta X)^2 + \Delta Y^2],$$

wobei der Ausdruck $\gamma(\Sigma + \Delta X)^2 + \Delta Y^2$ aus der

Vektoraddition von $\Sigma + \Delta$ (0°) (vgl. Vektordiagramm in Fig. 3) hervorgeht.

$$U1 = \log [A(f1) \cdot \Sigma \cdot \gamma 1 + 2\tfrac{\Delta X}{\Sigma} + Kxy] \text{ mit } Kxy = \tfrac{\Delta X^2 + \Delta Y^2}{\Sigma}$$

Bei einer Phase des Differenzsignals von

$$U1 = \log [A(f1)] + \log [\Sigma] + \tfrac{1}{2}\log[1 + 2\tfrac{\Delta X}{\Sigma} + Kxy]$$

Dementsprechend berechnen sich alle  
anderen Amplitudenstufen U2... U8.                                          0°

$$U2 = \log [A(f2)] + \log [\Sigma] + \tfrac{1}{2}\log[1 + 2\tfrac{\Delta X}{\Sigma} + Kxy]$$

$$U3 = \log [A(f1)] + \log [\Sigma] + \tfrac{1}{2}\log[1 - 2\tfrac{\Delta X}{\Sigma} + Kxy]$$

180°

$$U4 = \log [A(f2)] + \log [\Sigma] + \tfrac{1}{2}\log[1 - 2\tfrac{\Delta X}{\Sigma} + Kxy]$$

$$U5 = \log [A(f1)] + \log [\Sigma] + \tfrac{1}{2}\log[1 + 2\tfrac{\Delta Y}{\Sigma} + Kxy]$$

90°

$$U6 = \log [A(f2)] + \log [\Sigma] + \tfrac{1}{2}\log[1 + 2\tfrac{\Delta Y}{\Sigma} + Kxy]$$

$$U7 = \log [A(f1)] + \log [\Sigma] + \tfrac{1}{2}\log[1 - 2\tfrac{\Delta Y}{\Sigma} + Kxy]$$

270°

$$U8 = \log [A(f2)] + \log [\Sigma] + \tfrac{1}{2}\log[1 - 2\tfrac{\Delta X}{\Sigma} + Kxy]$$

Diese Amplitudenstufen U1... U8 werden in einem Analog-Digitalwandler AD digitalisiert und zur Berechnung der Nachführsignale Dx, Dy und des Steuersignals DF1 für den spannungsgesteuerten Oszillator VCO einem Mikroprozessor MP übergeben.

Das Steuersignal DF1 wird aus einem Frequenzfehlersignal DF abgeleitet, das sich wie folgt berechnet:

$$DF = \frac{\begin{matrix} U1 - U2 \\ U3 - U4 \\ U5 - U6 \\ U7 - U8 \end{matrix}}{\log[A(f1)] - \log[A(f2)]}$$

positiv für $A(f1) > A(f2)$

$$DF = \log \left[\tfrac{A(f1)}{A(f2)}\right] \text{ ist} \qquad 0 \text{ für } A(f1) = A(f2)$$

negativ für $A(f1) < A(f2)$

Das vom Mikroprozessor MP berechnete Frequenzfehlersignal DF wird beispielsweise durch eine Integration in das Steuersignal DF1 umgewandelt und dieses von einem Digital-Analog-Wandler DA in ein analoges Signal umgesetzt und dann dem spannungsgesteuerten Oszillator VCO zugeleitet. Die Umwandlung des Frequenzfehlersignals DF in das Steuersignal DF1 kann entweder im Microprozessor MP oder in einer entsprechenden analogen Baugruppe nach dem Digital-Analog-Wandler erfolgen. Das Vorzeichen des Frequenzfehlersignals DF gibt an, in welche Richtung der spannungsgesteuerte Oszillator VCO seine beiden Ausgangsfrequenzen fo + $\Delta$f und fo - $\Delta$f verschieben muß, und der Betrag des Frequenzfehlersignals DF sagt aus wie weit die Frequenzen geändert werden müssen, damit das umgesetzte Ausgangssignal des Mischers M in den Durchlaßbereich des Bandpaßfilters BP fällt.

Die Nachführsignale Dx und Dy berechnen sich folgendermaßen:

$$DX = (U1 + U2) - (U3 + U4)$$

$$DX = \log \frac{1 + 2\frac{\Delta X}{\Sigma} + Kxy}{1 - 2\frac{\Delta X}{\Sigma} + Kxy} \text{ ist} \quad \begin{array}{ll} \text{positiv} & \text{für } \Delta X > 0 \\ 0 & \text{für } \Delta X = 0 \\ \text{negativ} & \text{für } \Delta X < 0 \end{array}$$

$$DY = (U5 + U6) - (U7 + U8)$$

$$DX = \log \frac{1 + 2\frac{\Delta Y}{\Sigma} + Kxy}{1 - 2\frac{\Delta Y}{\Sigma} + Kxy} \text{ ist} \quad \begin{array}{ll} \text{positiv} & \text{für } \Delta Y > 0 \\ 0 & \text{für } \Delta Y = 0 \\ \text{negativ} & \text{für } \Delta Y < 0 \end{array}$$

Nach dem oben beschriebenen Verfahren können im Multiplexbetrieb auch die Nachführsignale von mehreren Antennen bestimmt werden, wozu nur eine Schaltung der in Fig. 7 dargestellten Art erforderlich ist.

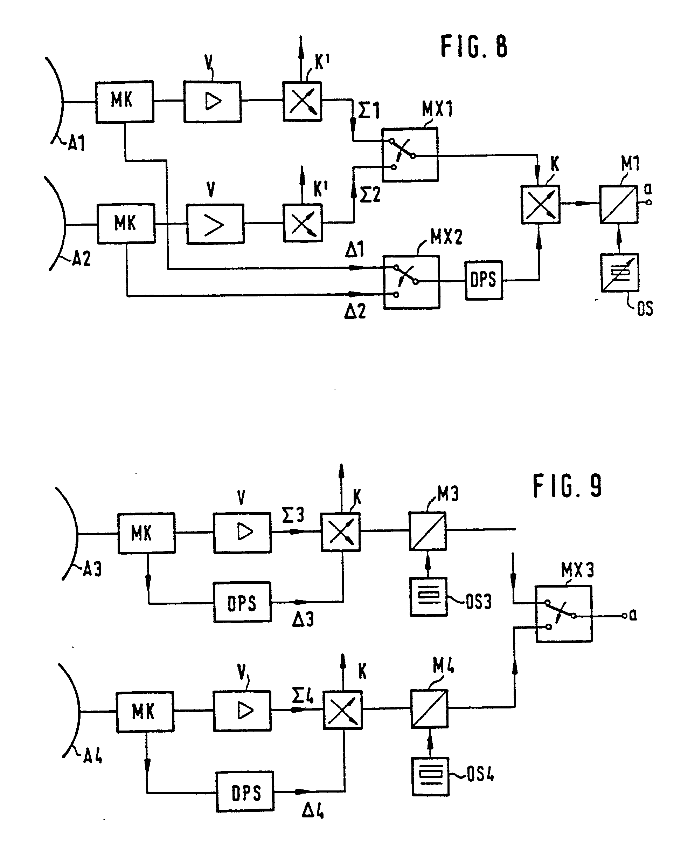

Gemäß den in Fig. 8 und 9 gezeigten Ausführungsbeispielen sind zwei Antennen A1 und A2 bzw. A3 und A4 mit ihren Monopulsschaltnetzwerken zusammengeschaltet. Die Monopulsschaltnetzwerke enthalten die mit gleichen Bezugszeichen versehenen Baugruppen wie die in Fig. 6 dargestellte Schaltung zum Empfang eines zirkular polarisierten Bakensignals.

Bei der Schaltung in Fig. 8 wird davon ausgegangen, daß die Frequenzen der von den Antennen A1 und A2 empfangenen Bakensignale innerhalb eines relativ schmalen Frequenzbereichs (z. B. um 30 GHz) liegen. In diesem Fall werden zeitlich gestaffelt die aus den von den Antennen A1, A2 empfangenen Bakensignalen abgeleiteten Summensignale Σ1, Σ2 und Differenzsignale Δ1, Δ2 über Multiplexer MX1 und MX2 auf einen gemeinsamen Koppler K geschaltet und darin überlagert. Das am Ausgang des Kopplers K erscheinende amplitudenmodulierte Multiplex-Signal wird in einem Mischer M1 umgesetzt. Den Mischer M1 steuert ein in seiner Frequenz umschaltbarer Oszillator OS so an, daß die unterschiedlichen Bakensignalfrequenzen in die gleiche Frequenz umgesetzt werden. Das am Ausgang a des Mischers M1 vorliegende amplitudenmodulierte Signal wird schließlich in einer Schaltung gemäß Fig. 7 weiterverarbeitet.

Liegen die Bakensignalfrequenzen sehr weit auseinander (z. B. 30 GHz, 14 GHz), so werden entsprechend dem Schaltungsbeispiel in Fig. 9 getrennt für jede Antenne A3, A4 die aus dem jeweiligen Bakensignal abgeleiteten Summen- und Differenzsignale Σ3 und Δ3 bzw. Σ4 und Δ4 einander überlagert. Ein Mischer M3, der von einem Oszillator OS3 gesteuert wird, setzt das Überlagerungssignal Σ3 + Δ3 in die gleiche Frequenz um wie ein Mischer M4, der von einem Oszillator OS4 gesteuert wird, das Überlagerungssignal Σ4 + Δ4 umsetzt. Die an den Ausgängen der Mischer M3 und M4 anliegenden gleichfrequenten amplitudenmodulierten Signale werden nun von einem Multiplexer MX3 an eine Schaltung gemäß Fig. 7 durchgeschaltet.

## Patentansprüche

1. Verfahren zum Erzeugen von Steuersignalen zum Nachführen einer Antenne auf eine andere ein Bakensignal aussendende Antenne, wobei dem in einem Modenkoppler (MK) aus dem von der nachführbaren Antenne empfangenen Bakensignal ein Summensignal und mindestens ein Differenzsignal abgeleitet, das Differenzsignal einer zyklischen Phasenänderung unterworfen, dieses verschiedene Phasenzustände durchlaufende Differenzsignal dem Summensignal überlagert und schließlich ermittelt wird, ob das durch die Überlagerung des Differenz- und des Summensignals entstandene amplitudenmodulierte Signal beim Übergang des Differenzsignals von einem Phasenzustand zu einem anderen eine positive oder negative Amplitudenänderung erfährt und um welchen Betrag sich das amplitudenmodulierte Signal ändert, dadurch gekennzeichnet, daß das amplitudenmodulierte Signal von einem Mischer (M) in eine andere Frequenz umgesetzt wird und dann über ein schmalbandiges, nur die Signalfrequenz durchlassendes Bandpaßfilter (BP) einem Amplitudendetektor (A) zugeführt wird, daß der Mischer (M) von einem spannungsgesteuerten Oszillator (VCO) angesteuert wird, dessen Ausgangsfrequenz fo während der Dauer eines jeden Phasenzustandes des Differenzsignals (Δ) zyklisch wechselweise auf je eine von zwei symmetrisch zu der Ausgangsfrequenz liegenden Frequenzen umgeschaltet wird und daß die Steuerspannung (DF1) für den spannungsgesteuerten Oszillator (VCO) aus der Differenz zwischen den Dämpfungen abgeleitet wird, die das amplitudenmodulierte Signal im Bandpaßfilter (BP) bei den beiden Frequenzen erleidet, in die das Signal im Mischer (M) auf Grund der Frequenzumschaltung des spannungsgesteuerten Oszillators (VCO) umgesetzt wird.

2. Verfahren nach Anspruch 1, dadurch gekennzeichnet, daß das Ausgangssignal des Amplitudendetektors (AM) logarithmiert wird.

3. Verfahren nach Anspruch 1, dadurch gekennzeichnet, daß dem Mischer (M), welcher von dem zwischen zwei Frequenzen umschaltenden spannungsgesteuerten Oszillator (VCO) angesteuert wird, dem Bandpaßfilter (BP) und dem Amplitudendetektor (AM) im Multiplexverfahren von mehreren nachzuführenden Antennen (A1, A2, A3, A4) amplitudenmodulierte Signale zugeführt werden, welche jeweils durch Überlagerung eines Summensignals (Σ1, Σ2, Σ3, Σ4) und mindestens eines mehrere Phasenzustände durchlaufenden Differenzsignals (Δ1, Δ2, Δ3, Δ4) gebildet werden.

**Claims**

1. Method of producing control signals for causing an antenna to track another antenna which is emitting a beacon signal, with a sum signal and at least one difference signal being derived in a mode coupler (MK) from the beacon signal received from the tracking antenna, the difference signal being subjected to cyclical changes in phase and, as it passes through the different phase states, being superposed on the sum signal and finally a determination being made as to whether the amplitude modulated signal resulting from the superposition of the difference signal and the sum signal is subjected to a positive or negative change in amplitude during the transition of the difference signal from one phase state to the other and by which amount the amplitude modulated signal changes, <u>characterised in that</u>, in a mixer (M), the amplitude modulated signal is converted to another frequency and is then fed, via a narrowband bandpass filter (BP) which permits only the signal frequency to pass, to an amplitude detector (A); the mixer (M) is controlled by a voltage controlled oscillator (VCO) whose output frequency fo is cyclically switched alternatingly to one of two frequencies which are symmetrical to the output frequency for the duration of each phase state of the difference signal ($\Delta$); and the control voltage (DF1) for the voltage controlled oscillator (VCO) is derived from the difference between the attenuations suffered by the amplitude modulated signal in the bandpass filter (BP) at the two frequencies to which the signal is converted in the mixer (M) on the basis of the frequency switching of the voltage controlled oscillator (VCO).

2. Method according to claim 1, characterised in that the output signal of the amplitude detector (A) is logarithmised.

3. Method according to claim 1, characterised in that the mixer (M) actuated by the voltage controlled oscillator (VCO) which switches between the two frequencies, the bandpass filter (BP) and the amplitude detector (AM) receive, in a multiplex process, amplitude modulated signals from a plurality of tracking antennas (A1, A2, A3, A4), each of said amplitude modulated signals being formed by superposition of a sum signal ($\Sigma1$, $\Sigma2$, $\Sigma3$, $\Sigma4$) and at least one difference signal ($\Delta1$, $\Delta2$, $\Delta3$, $\Delta4$) which passes through a plurality of phase states.

**Revendications**

1. Procédé de production de signaux de commande pour faire poursuivre une antenne par une autre antenne qui émet un signal de balise, dans lequel, dans un coupleur de modes MK, on fait dériver d'un signal de balise reçu par l'antenne à poursuivre un signal d'addition et au moins un signal de différence, on soumet le signal de différence à un changement de phase cyclique, on superpose au signal d'addition ce signal de différence passant par différentes positions de phase et enfin on détermine si le signal modulé en amplitude, résultant de la superposition du signal de différence et du signal d'addition, lors du passage du signal de différence d'une position de phase à une autre, subit une modification d'amplitude positive ou négative et de combien se modifie le signal modulé en amplitude, <u>caractérisé en ce que</u> le signal modulé en amplitude est converti par un mélangeur (M) en une autre fréquence, puis amené à un détecteur d'amplitude (AM) par l'intermédiaire d'un filtre passe-bande (BP) à bande étroite, ne laissant passer que la fréquence du signal; en ce que le mélangeur (M) est piloté par un oscillateur commandé par la tension (VCO) dont, pendant la durée de chaque position de phase du signal de différence ($\Delta$), on fait commuter la fréquence de sortie fo cycliquement et alternativement sur respectivement l'une de deux fréquences situées symétriquement par rapport à la fréquence de sortie; et en ce que l'on déduit la tension de commande (DF1) pour l'oscillateur commandé par la tension (VCO) de la différence entre les amortissements que subit, dans le filtre passe-bande (BP), le signal modulé en amplitude pour les deux fréquences dans lesquelles le signal est converti dans le mélangeur (M) sur la base de la commutation de fréquence de l'oscillateur commandé par la tension (VCO).

2. Procédé selon la revendication 1, <u>caractérisé en ce que</u> l'on prend le logarithme du signal de sortie du détecteur d'amplitude (AM).

3. Procédé selon la revendication 1, <u>caractérisé en ce qu'au</u> mélangeur (M), qui est piloté par l'oscillateur commandé par la tension (VCO) qui commute entre deux fréquences, au filtre passe-bande (BP) et au détecteur d'amplitude (AM), on amène, dans le procédé de multiplexage, en provenance de plusieurs antennes à poursuivre (A1, A2, A3, A4), des signaux modulés en amplitude qui sont respectivement formés par superposition d'un signal d'addition ($\Sigma1$, $\Sigma2$, $\Sigma3$, $\Sigma4$) et d'au moins un signal de différence ($\Delta1$, $\Delta2$, $\Delta3$, $\Delta4$) passant par plusieurs positions de phase.

FIG. 1

FIG. 2

| ΔX/ΔY | ΔX | ΔX | ΔY | ΔY |
|-------|-----|------|-----|------|
| 0°/180° | 0° | 180° | 0° | 180° |

FIG. 3

| 0°/90° | 0°(ΔX) | 0°(ΔX) | 90°(ΔY) | 90°(ΔY) |
|--------|--------|--------|---------|---------|
| 0°/180° | 0° | 180° | 0° | 180° |

FIG. 4a

FIG.4b

FIG. 4c

FIG. 5

FIG. 6

FIG. 7

FIG. 8

FIG. 9